# EUROPEAN PATENT APPLICATION

(11) **EP 4 486 054 A1**
(43) Date of publication of application: **01.01.2025**
(21) Application number: 23777754.5
(22) Date of filing: 03.03.2023
(51) Int. Cl.: H04W 84/12

(54) **METHOD AND APPARATUS FOR SENDING NULL DATA PHYSICAL LAYER PROTOCOL DATA UNIT**

(30) Priority: 02.04.2022 CN 202210346893
(71) Applicant: Huawei Technologies Co., Ltd., Shenzhen, Guangdong 518129 (CN)
(72) Inventor: HU, Mengshi, Shenzhen, Guangdong 518129 (CN); HAN, Xiao, Shenzhen, Guangdong 518129 (CN); YU, Jian, Shenzhen, Guangdong 518129 (CN); DU, Rui, Shenzhen, Guangdong 518129 (CN); NAREN, Gerile, Shenzhen, Guangdong 518129 (CN); XIN, Yan, Shenzhen, Guangdong 518129 (CN); SUH, Jung Hoon, Shenzhen, Guangdong 518129 (CN)
(74) Representative: Goddar, Heinz J.
(86) International application number: PCT/CN2023/079621
(87) International publication number: WO 2023/185376

(57) **Abstract**

This application relates to the field of WLAN technologies, and in particular, to a null data physical layer protocol data unit transmitting method and an apparatus, and may be used in a wireless communication system that supports the 802.11be standard or the EHT standard. In the method, a first device transmits a sensing NDPA frame, where the sensing NDPA frame indicates to transmit an NDP; and then, the first device transmits the NDP, where the NDP is a first NDP or a second NDP. A physical layer version of the first NDP is different from a physical layer version of the second NDP. Correspondingly, a second device receives the sensing NDPA frame and the NDP from the first device. This solution avoids using only one NDP of a fixed physical layer version, and flexibly and fully utilizes advantages of the first NDP and the second NDP, thereby improving sensing performance.

## Description

This application claims priority to Chinese Patent Application No. 202210346893.X, filed with the China National Intellectual Property Administration on April 2, 2022 and entitled "NULL DATA PHYSICAL LAYER PROTOCOL DATA UNIT TRANSMITTING METHOD AND APPARATUS", which is incorporated herein by reference in its entirety.

### TECHNICAL FIELD

Embodiments of this application relate to the communication field, and in particular, to a null data physical layer protocol data unit transmitting method and an apparatus.

### BACKGROUND

A sensing process is discussed in a wireless local area network (wireless local area network, WLAN) standard, like 802.11 bf. A basically accepted sensing procedure includes the following main phases: a sensing session setup (sensing session setup) phase, a measurement setup (measurement setup) phase, and a measurement instance (measurement instance) phase.

In the measurement instance phase, a WLAN device may transmit a null data PPDU announcement (null data PPDU announcement, NDPA) frame, where the NDPA frame is used to notify that the WLAN device is to transmit a null data PPDU (null data PPDU, NDP) following the NDPA frame, and the PPDU is physical layer protocol data unit (physical layer protocol data unit, PPDU). A device that receives the NDPA frame may obtain channel information and the like by measuring the NDP following the NDPA.

### SUMMARY

This application provides a null data physical layer protocol data unit transmitting method and an apparatus, to avoid using only one NDP of a fixed physical layer version, and flexibly and fully utilize advantages of a first NDP and a second NDP, thereby improving sensing performance.

According to a first aspect, a null data physical layer protocol data unit transmitting method is provided. The method may be performed by a first device, may be performed by a component of the first device, for example, a processor, a chip, or a chip system, or may be implemented by a logical module or software that can implement all or some functions of the first device. The method includes: transmitting a sensing NDPA frame, where the sensing NDPA frame indicates to transmit an NDP; and transmitting the NDP, where the NDP is a first NDP or a second NDP, and a physical layer version of the first NDP is different from a physical layer version of the second NDP.

According to this solution, the first device transmits the sensing NDPA frame, and then correspondingly transmits the first NDP or the second NDP. This avoids that only one fixed NDP is brought from the sensing NDPA frame, or avoids that the sensing NDPA frame corresponds to only one fixed NDP, and flexibly and fully utilizes advantages of the first NDP and the second NDP, thereby improving sensing performance.

In a possible design, the first NDP meets at least one of the following: A bandwidth supported by the first NDP is greater than a first threshold, or the first NDP supports puncturing. The second NDP meets at least one of the following: The second NDP supports a secure long training field LTF, and the second NDP supports a repeated LTF.

Based on this possible design, when the bandwidth supported by the first NDP is greater than the first threshold, because a larger bandwidth greatly helps improve sensing accuracy, sensing accuracy may be improved by transmitting the first NDP. When the first NDP supports puncturing, bandwidth resources may be more effectively utilized and resource utilization may be improved by transmitting the first NDP. When the second NDP supports the secure LTF, security performance may be improved by transmitting the second NDP. When the second NDP supports the repeated LTF, a signal-to-noise ratio of a receiving end may be improved.

In a possible design, when a first condition is met, the NDP is the first NDP; or when the first condition is not met, the NDP is the second NDP. The first condition includes at least one of the following:
A bandwidth of a first physical layer protocol data unit PPDU is greater than the first threshold, where the first PPDU includes the sensing NDPA frame, or the first PPDU is the NDP;
puncturing occurs in the first PPDU;
an unavailable subchannel is present on a first channel, where the first channel is used to transmit the first PPDU;
a quantity of data streams supported by the NDP is greater than or equal to a second threshold; and
a first resource is a resource unit that is not supported by the physical layer version of the second NDP, where the first resource is used to carry the sensing NDPA frame, or the first resource is a to-be-measured resource on the first channel.

Based on this possible design, the first NDP is transmitted when the first condition is met, and the second NDP is transmitted when the first condition is not met. Therefore, NDPs of different physical layer versions may be properly transmitted based on the first condition.

In a possible design, the sensing NDPA frame includes a first field, and the first field indicates that the bandwidth of the first PPDU is greater than the first threshold.

In a possible design, the sensing NDPA frame includes a first station information field, the first station information field includes an association identifier field, a value of the association identifier field is a first specific value, and the first specific value indicates that the unavailable subchannel is present on the first channel.

In a possible design, the first station information field further includes a second field, and the second field indicates the unavailable subchannel.

In a possible design, the method further includes transmitting a beacon frame, where the beacon frame includes first indication information, and the first indication information indicates that the unavailable subchannel is present on the first channel.

In a possible design, the unavailable subchannel overlaps a subchannel range corresponding to a transmission bandwidth of the NDP.

In a possible design, when the first PPDU includes the sensing NDPA frame, a preamble part of the first PPDU includes a third field, and the third field indicates that puncturing occurs in the first PPDU.

In a possible design, when the first resource is the to-be-measured resource on the first channel, the sensing NDPA frame includes a station information field, the station information field includes a fourth field, and the fourth field indicates the first resource.

In a possible design, the sensing NDPA frame includes a fifth field, and the fifth field indicates whether the NDP is the first NDP or the second NDP.

In a possible design, the fifth field is located in each station information field in the sensing NDPA frame, or the fifth field is located in a field included in the sensing NDPA frame other than the station information field.

In a possible design, when a second station information is present in the sensing NDPA frame, the NDP is the first NDP; or when the second station information field is not present in the sensing NDPA frame, the NDP is the second NDP. The second station information field includes an association identifier field, and a value of the association identifier field is a second specific value.

In a possible design, before the transmitting a sensing NDPA frame, the method further includes: transmitting a radio frame, where the radio frame indicates whether the NDP is the first NDP or the second NDP, and/or the radio frame indicates a type of the sensing NDPA frame.

In a possible design, the transmitting the NDP includes: transmitting the NDP in a measurement instance; and when trigger-based sounding and NDPA sounding occur in the measurement instance, the NDP is the second NDP.

In a possible design, the sensing NDPA frame includes a sounding dialog token field and a sixth field, where the sounding dialog token field includes a first subfield, the first subfield indicates a first NDPA frame, and the sixth field indicates that the sensing NDPA frame reuses the first NDPA frame. The first NDPA frame is one of a ranging NDPA frame, a very high throughput VHT NDPA frame, a high efficient HE NDPA frame, or an extremely high throughput EHT NDPA frame. Alternatively, the sensing NDPA frame includes a frame control field, the frame control field includes a control frame extension field, and the control frame extension field indicates the type of the sensing NDPA frame.

According to a second aspect, a null data physical layer protocol data unit receiving method is provided. The method may be performed by a second device, may be performed by a component of the second device, for example, a processor, a chip, or a chip system, or may be implemented by a logical module or software that can implement all or some functions of the second device. The method includes: receiving a sensing NDPA frame, where the sensing NDPA frame indicates to transmit a null data physical layer protocol data unit NDP; and receiving the NDP, where the NDP is a first NDP or a second NDP, and a physical layer version of the first NDP is different from a physical layer version of the second NDP.

In this solution, the second device receives the sensing NDPA frame, and then correspondingly receives the first NDP or the second NDP. This avoids that only one fixed NDP is brought from the sensing NDPA frame, or avoids that the sensing NDPA frame corresponds to only one fixed NDP, and flexibly and fully utilizes advantages of the first NDP and the second NDP, thereby improving sensing performance.

In a possible design, the first NDP meets at least one of the following: A bandwidth supported by the first NDP is greater than a first threshold, or the first NDP supports puncturing. The second NDP meets at least one of the following: The second NDP supports a secure long training field LTF, and the second NDP supports a repeated LTF.

In a possible design, when a first condition is met, the NDP is the first NDP; or when the first condition is not met, the NDP is the second NDP. The first condition includes at least one of the following:
A bandwidth of a first physical layer protocol data unit PPDU is greater than the first threshold, where the first PPDU includes the sensing NDPA frame, or the first PPDU is the NDP;
puncturing occurs in the first PPDU;
an unavailable subchannel is present on a first channel, where the first channel is used to transmit the first PPDU;
a quantity of data streams supported by the NDP is greater than or equal to a second threshold; and
a first resource is a resource unit that is not supported by the physical layer version of the second NDP, where the first resource is used to carry the sensing NDPA frame, or the first resource is a to-be-measured resource on the first channel.

In a possible design, the sensing NDPA frame includes a first field; and the method further includes: when the first field indicates that the bandwidth of the first PPDU is greater than the first threshold, parsing the NDP based on a format of the first NDP.

In a possible design, the sensing NDPA frame includes a first station information field, and the first station information field includes an association identifier field; and the method further includes: when a value of the association identifier field is a first specific value, parsing the NDP based on the format of the first NDP, where the first specific value indicates that the unavailable subchannel is present on the first channel.

In a possible design, the first station information field further includes a second field, and when the value of the association identifier field is the first specific value, the parsing the NDP based on the format of the first NDP includes: when the value of the association identifier field is the first specific value, and the second field indicates the unavailable subchannel, parsing the NDP based on the format of the first NDP.

In a possible design, the method further includes receiving a beacon frame, where the beacon frame includes first indication information, and the first indication information indicates that when the unavailable subchannel is present on the first channel, parsing the NDP based on the format of the first NDP.

In a possible design, the unavailable subchannel overlaps a subchannel range corresponding to a transmission bandwidth of the NDP.

In a possible design, when the first PPDU includes the sensing NDPA frame, a preamble part of the first PPDU includes a third field, and the method further includes: when the third field indicates that puncturing occurs in the first PPDU, parsing the NDP based on the format of the first NDP.

In a possible design, when the first resource is the to-be-measured resource on the first channel, the sensing NDPA frame includes a station information field, and the station information field includes a fourth field; and the method further includes: when the first resource indicated by the fourth field is a resource unit that is not supported by the physical layer version of the second NDP, parsing the NDP based on the format of the first NDP.

In a possible design, the sensing NDPA frame includes a fifth field, and the method further includes: when the fifth field indicates that the NDP is the first NDP, parsing the NDP based on the format of the first NDP; and when the fifth field indicates that the NDP is the second NDP, parsing the NDP based on the format of the first NDP.

In a possible design, the fifth field is located in each station information field in the sensing NDPA frame, or the fifth field is located in a field included in the sensing NDPA frame other than the station information field.

In a possible design, when a second station information is present in the sensing NDPA frame, the method further includes: parsing the NDP based on the format of the first NDP; and when the second station information field is not present in the sensing NDPA frame, parsing the NDP based on a format of the second NDP. The second station information field includes an association identifier field, and a value of the association identifier field is a second specific value.

In a possible design, before the receiving a sensing NDPA frame, the method further includes: receiving a radio frame, where the radio frame indicates whether the NDP is the first NDP or the second NDP, and/or the radio frame indicates a type of the sensing NDPA frame.

In a possible design, the transmitting the NDP includes: transmitting the NDP in a measurement instance; and when trigger-based sounding and NDPA sounding occur in the measurement instance, the NDP is the second NDP.

In a possible design, the sensing NDPA frame includes a sounding dialog token field and a sixth field, where the sounding dialog token field includes a first subfield, the first subfield indicates a first NDPA frame, and the sixth field indicates that the sensing NDPA frame reuses the first NDPA frame. The first NDPA frame is one of a ranging NDPA frame, a very high throughput VHT NDPA frame, a high efficient HE NDPA frame, or an extremely high throughput EHT NDPA frame. Alternatively, the sensing NDPA frame includes a frame control field, the frame control field includes a control frame extension field, and the control frame extension field indicates the type of the sensing NDPA frame.

According to a third aspect, a communication apparatus is provided and is configured to implement the foregoing methods. The communication apparatus may be the first device in the first aspect, or an apparatus included in the first device, for example, a chip. Alternatively, the communication apparatus may be the second device in the second aspect, or an apparatus included in the second device, for example, a chip. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a transceiver module. Further, the communication apparatus may further include a processing module. The processing module may be configured to implement a processing function in any one of the foregoing aspects and the possible implementations of the foregoing aspects. The transceiver module may also be referred to as a transceiver unit, and is configured to implement a transmitting function and/or a receiving function in any one of the foregoing aspects and the possible implementations of the foregoing aspects. The transceiver module may include a transceiver circuit, a transceiver device, a transceiver, or a communication interface.

In a possible design, the transceiver module includes a transmitting module and a receiving module that are respectively configured to implement a transmitting function and a receiving function in any one of the foregoing aspects and the possible implementations of the foregoing aspects.

According to a fourth aspect, a communication apparatus is provided. The apparatus includes a processor and a memory. The memory is configured to store computer instructions. When the processor executes the instructions, the communication apparatus is enabled to perform the method in any one of the foregoing aspects. The communication apparatus may be the first device in the first aspect, or an apparatus included in the first device, for example, a chip. Alternatively, the communication apparatus may be the second device in the second aspect, or an apparatus included in the second device, for example, a chip.

According to a fifth aspect, a communication apparatus is provided, including a processor and a communication interface. The communication interface is configured to communicate with a module outside the communication apparatus. The processor is configured to execute a computer program or instructions, to enable the communication apparatus to perform the method in any one of the foregoing aspects. The communication apparatus may be the first device in the first aspect, or an apparatus included in the first device, for example, a chip. Alternatively, the communication apparatus may be the second device in the second aspect, or an apparatus included in the second device, for example, a chip.

According to a sixth aspect, a communication apparatus is provided, including a logic circuit and an interface circuit. The interface circuit is configured to input information and/or output information. The logic circuit is configured to: perform the method according to any one of the foregoing aspects, and perform processing based on input information and/or generate output information. The communication apparatus may be the first device in the first aspect, or an apparatus included in the first device, for example, a chip. Alternatively, the communication apparatus may be the second device in the second aspect, or an apparatus included in the second device, for example, a chip.

According to a seventh aspect, a communication apparatus is provided, including an interface circuit and a processor. The interface circuit is a code/data read/write interface circuit. The interface circuit is configured to receive computer-executable instructions (where the computer-executable instructions are stored in a memory, may be read directly from the memory, or may be read via another component) and transmit the computer-executable instructions to the processor. The processor is configured to execute the computer-executable instructions, to enable the communication apparatus to perform the method according to any one of the foregoing aspects. The communication apparatus may be the first device in the first aspect, or an apparatus included in the first device, for example, a chip. Alternatively, the communication apparatus may be the second device in the second aspect, or an apparatus included in the second device, for example, a chip.

According to an eighth aspect, a communication apparatus is provided, including at least one processor. The processor is configured to execute a computer program or instructions, to enable the communication apparatus to perform the method in any one of the foregoing aspects. The communication apparatus may be the first device in the first aspect, or an apparatus included in the first device, for example, a chip. Alternatively, the communication apparatus may be the second device in the second aspect, or an apparatus included in the second device, for example, a chip.

In some possible designs, the communication apparatus includes the memory, and the memory is configured to store a necessary computer program or necessary instructions. The memory may be coupled to the processor, or may be independent of the processor.

In some possible designs, the communication apparatus may be a chip or a chip system. When the apparatus is a chip system, the chip system may include a chip, or may include a chip and another discrete component.

According to a ninth aspect, a computer-readable storage medium is provided. The computer-readable storage medium stores a computer program or instructions, and when the computer program or the instructions is/are executed by a processor, the method in any one of the foregoing aspects is performed.

According to a tenth aspect, a computer program product is provided. When the computer program product is executed by a processor, the method in any one of the foregoing aspects is performed.

It may be understood that when the communication apparatus provided in any one of the third aspect to the tenth aspect is a chip, the foregoing transmitting action/function may be understood as outputting information, and the foregoing receiving action/function may be understood as inputting information.

For the technical effects brought by any one of the designs of the third aspect to the tenth aspect, refer to the technical effects brought by different designs of the first aspect or the second aspect. Details are not described herein again.

According to an eleventh aspect, a communication system is provided. The communication system includes the first device according to the first aspect and the second device according to the second aspect.

### BRIEF DESCRIPTION OF DRAWINGS

FIG. 1 is a schematic of a structure of an NDPA frame according to this application;
FIG. 2 is a schematic of a structure of another NDPA frame according to this application;
FIG. 3 is a schematic of a structure of a communication system according to this application;
FIG. 4 is a schematic of a structure of a communication apparatus according to this application;
FIG. 5 is a schematic flowchart of an NDP transmitting and receiving method according to this application;
FIG. 6 is a schematic of a structure of a first device according to this application;
FIG. 7 is a schematic of a structure of a second device according to this application; and
FIG. 8 is a schematic of a structure of another communication apparatus according to this application.

### DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" are intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of processes do not mean execution sequences in various embodiments of this application. The execution sequences of the processes should be determined based on functions and internal logic of the processes, and should not be construed as any limitation on implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements. Correspondingly, the apparatus provided in embodiments of this application may also correspondingly implement these features or functions. Details are not described herein.

In this application, unless otherwise specified, for identical or similar parts in embodiments, refer to each other. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

To facilitate understanding of the technical solutions in embodiments of this application, the following first briefly describes related technologies in this application.

### 1. Sensing initiator, sensing responder, sensing transmitter, and sensing receiver:

Sensing initiator (sensing initiator): A sensing initiator is a station (station, STA) that initiates a wireless local area network (wireless local area network, WLAN) sensing process.

Sensing responder (sensing responder): A sensing responder is a station that participates in the WLAN sensing process initiated by the sensing initiator.

Sensing transmitter (sensing transmitter): A sensing transmitter is a station that transmits, in the sensing process, a physical layer protocol data unit (physical layer protocol data unit, PPDU) for sensing measurement.

Sensing receiver (sensing receiver): A sensing receiver is a station that receives the PPDU transmitted by the sensing transmitter and performs sensing measurement in the sensing process.

In this application, a station may be an access point station (access point station, AP STA) or a non-access point station (non-access point station, non-AP STA). For ease of description, the AP STA is an AP for short in the following embodiments of this application.

### 2. Sensing process:

A basically accepted sensing process in WLAN standards is divided into the following five phases:
(1) Sensing session setup (sensing session setup)

This phase indicates that a sensing session is set up between stations, and related parameters (specific parameters are to be determined) may be exchanged in the phase. One sensing session may be understood as a protocol reached between two stations, that is, a sensing initiator and a sensing responder. One sensing initiator may maintain sensing sessions with a plurality of sensing responders.

### (2) Measurement setup (measurement setup)

This phase is used by a sensing initiator and a sensing responder to exchange and unify some parameters, attributes, or the like used in a sensing process. The parameters may include, for example, roles of the sensing initiator and the sensing responder (for example, as a sensing transmitter or a sensing receiver) and a measurement feedback type.

To clearly identify measurement setup, a manner of labeling the measurement setup, that is, each measurement setup is denoted with an identifier (identifier, ID), is used in a current standard discussion.

### (3) Measurement instance

Sensing measurement occurs in a measurement instance, and a plurality of sensing responders are allowed to join in one measurement instance. One measurement instance is denoted with an identifier.

The measurement instance may be classified into a trigger-based (trigger-based, TB) sensing measurement instance (TB sensing measurement instance) and a non-trigger-based sensing measurement instance (non-TB sensing measurement instance). For example, the trigger-based sensing measurement instance may include the following phases: a polling phase (polling phase), a null data PPDU announcement (null data PPDU announcement, NDPA) sounding phase (NDPA sounding phase), a trigger frame (trigger frame, TF) sounding phase (TF sounding phase), a reporting phase, and the like.

The polling phase is used to determine whether a queried station can participate in measurement and feedback in a current measurement instance.

In the NDPA sounding phase, a sensing initiator may notify a sensing responder through an NDPA frame that the sensing responder is to transmit a null data PPDU (null data PPDU, NDP) following the NDPA frame. The NDPA frame may indicate a sensing responder that needs to listen to the NDP and other configuration information, and the sensing responder may learn of channel information and the like by measuring the NDP following the NDPA.

In the trigger frame sounding phase, the sensing initiator may trigger the sensing responder to transmit the NDP through a trigger frame, and the sensing initiator measures the NDP for sensing.

In the reporting phase, the sensing responder may transmit sensing measurement-related information such as channel information to the sensing initiator through a feedback (feedback) frame.

Optionally, one measurement instance may include both the NDPA sounding phase and the trigger frame sounding phase; one measurement instance may include the NDPA sounding phase, but does not include the trigger frame sounding phase; or one measurement instance may not include the NDPA sounding phase, but includes the trigger frame sounding phase.

### (4) Measurement setup termination (measurement setup termination)

Measurement setup termination is used to terminate a measurement setup process corresponding to a sensing responder, that is, after the measurement setup process is terminated, the sensing responder is no longer bound to the corresponding measurement setup, but may still be in a sensing session.

### (5) Sensing session termination (sensing session termination)

Sensing session termination is used to terminate a sensing session. After the sensing session is terminated, a station does not participate in a process such as sensing measurement.

### 3. NDPA variants:

Currently, an NDPA has the following four variants: a very high throughput (very high throughput, VHT) NDPA frame, a ranging (ranging) NDPA frame, a high efficient (high efficient, HE) NDPA frame, and an extremely high throughput (extremely high throughput, EHT) NDPA frame.

Correspondingly, NDPs corresponding to the foregoing four variants are respectively: a VHT NDP (corresponding to the VHT NDPA frame), an HE ranging NDP (corresponding to the ranging NDPA frame), an HE sounding NDP (corresponding to the HE NDPA frame), and an EHT NDP (corresponding to the EHT NDPA frame).

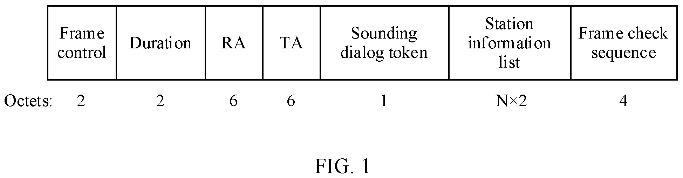

For example, a structure of the VHT NDPA frame may be shown in FIG. 1, and includes: a frame control (frame control) field (field) with a length of 2 octets, a duration (duration) field with a length of 2 octets, a receiver address (receive address, RA) field with a length of 6 octets, a transmitter address (transmission address, TA) field with a length of 6 octets, a sounding dialog token (sounding dialog token) field with a length of 1 octet, a station information list (STA info list) with a length of 2×N octets, and a frame check sequence (frame check sequence, FCS) field with a length of 4 octets. The station information list may include N station information fields, and a length of each station information field is 2 octets.

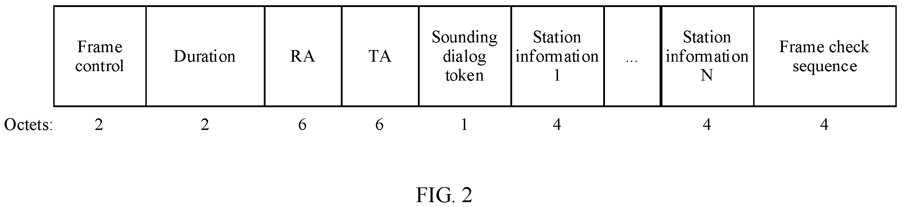

Structures of the HE NDPA frame, the EHT NDPA frame, and the ranging NDPA frame may be shown in FIG. 2, and include: a frame control field with a length of 2 octets, a duration field with a length of 2 octets, an RA field with a length of 6 octets, a TA field with a length of 6 octets, a sounding dialog token field with a length of 1 octet, N station information (STA info) field with a length of 4 octets, and a frame check sequence (frame check sequence, FCS) field with a length of 4 octets.

It should be noted that a length of each field in this application is merely an example for description. The length of the field is not specifically limited in this application. In actual application, the length of the filed may be another value.

The foregoing four NDPA variants may be distinguished by using values of bit 0 (B0) and bit 1 (B1) in a sounding dialog token. For example, NDPA variants corresponding to various values of B0 and B 1 in the sounding dialog token may be shown in Table 1.

**Table 1**

| B1 | B0 | NDPA variant |
|---|---|---|
| 0 | 0 | VHT NDPA frame |
| 0 | 1 | Ranging NDPA frame |
| 1 | 0 | HE NDPA frame |
| 1 | 1 | EHT NDPA frame |

B0 and B1 in the sounding dialog token are referred to as NDPA variant subfields in the EHT standard, and are referred to as NDPA type subfields in the ranging standard (802. 1 1az). Although names of B0 and B 1 are different in different standards, interpretation by a device on the two bits is not affected.

It should be noted that a length of each station information field in the VHT NDPA frame is 2 octets, and a length of each station information field in each of the HE NDPA frame, the EHT NDPA frame, and the ranging NDPA frame is 4 octets. In addition, the station information field is interpreted differently for different NDPA variants.

Each station information field in the HE NDPA frame, the EHT NDPA frame, and the ranging NDPA frame includes an 11-bit (B0 to B 10) association identifier (association identifier, AID) subfield. Each station information field in the VHT NDPA frame includes a 12-bit (B0 to B11) or 13-bit (B0 to B12) AID subfield.

An AID subfield indicates an AID of a station, or corresponds to the AID of the station. After receiving an NDPA frame, the station may parse station information fields one by one. When an AID indicated by an AID subfield in a station information field is the AID of the station, the station information field is a field corresponding to the station, and the station may continue to parse the station information field to obtain information.

The N station information fields in the NDPA frame may one-to-one correspond to N stations, and a station information field is used to carry information required by a station corresponding to the station information field. Different stations may require different information, that is, different station information fields may carry different information.

For the HE NDPA frame and the ranging NDPA frame, common fields (fields before the station information field) in the structure shown in FIG. 2 may be not sufficient to carry information required by each station. Therefore, to expand a common part that all stations need to read, an extended common field that uses a special AID identifier is added in the HE NDPA frame and the ranging NDPA frame, that is, the extended common field is a special station information field, and a value of an AID subfield of the special station information field is a special value or a special AID. For example, meanings corresponding to various values of the AID subfield may be shown in the following Table 2.

**Table 2**

| AID subfield | Applicable NDPA variant | Remarks |
|---|---|---|
| 0 | Applicable to any NDPA variant | Correspond to an associated AP, a multi-hop AP, or an IBSS AP, where an IBSS refers to an independent basic service set (independent basic service set, IBSS). |
| 1 to 2007 | Applicable to any NDPA variant | For non-ranging variants, correspond to associated users; and for ranging variants, correspond to associated users or unassociated users. |
| 2008 to 2042 | Applicable to none of NDPA variants | Reserved |
| 2043 | Applicable only to a ranging NDPA | Notify sequence authentication code required for ranging in the ranging NDPA. |
| 2044 | Applicable only to a ranging NDPA | Notify a partial timing synchronization function (timing synchronization function, TSF) required for ranging in the ranging NDPA. |
| 2045 | Applicable only to a ranging NDPA | Notify a ranging measurement parameter for ranging in the ranging NDPA. |
| 2046 | Applicable to none of NDPA variants | Reserved |
| 2047 | Applicable only to an HE NDPA | Notify a subchannel puncturing information bitmap required by HE in the HE NDPA. |

2043, 2044, 2045, and 2047 may be understood as the foregoing special values or special AIDs.

The foregoing NDPA variants may be considered as NDPAs in the non-802.11bf standard, and corresponding NDPs may be considered as NDPs in the non-802.11bf standard. Therefore, it is necessary to design an NDPA and an NDP in the 802.1 1bf standard.

Based on this, this application provides an NDP transmitting method, and designs a sensing NDPA applicable to the 802. 1 1bf standard. A first NDP or a second NDP is brought from the sensing NDPA. This avoids using only an NDP with a fixed type, and flexibly and fully utilizes advantages of the first NDP and the second NDP, thereby improving sensing performance.

Embodiments of this application may be applicable to a wireless local area network (wireless local area network, WLAN) scenario, may be applicable to an Institute of Electrical and Electronics Engineers (institute of electrical and electronics engineers, IEEE) 802.11bf standard, or may be applicable to another 802.11 system standard, such as the 802.11a/b/g standard, the 802.11n standard, the 802.11ac standard, the 802.11ax standard, or a next generation of the 802.11ax standard, such as the 802.11be standard or a further next generation standard. Alternatively, embodiments of this application may be applicable to a wireless local area network system such as an internet of things (internet of things, IoT) network or a vehicle to everything (vehicle to X, V2X) network. Certainly, embodiments of this application are also applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and a future 5th generation (5th generation, 5G) communication system.

Communication systems applicable to this application are merely examples for description, and a communication system applicable to this application is not limited thereto. A unified description is provided herein, and details are not described below.

First, this application provides a WLAN communication system to which embodiments of this application are applicable. The WLAN communication system includes a first device and a second device.

Optionally, both the first device and the second device may be APs. Alternatively, one of the first device and the second device may be an AP, and the other may be a non-AP STA. Alternatively, both the first device and the second device may be non-AP STAs.

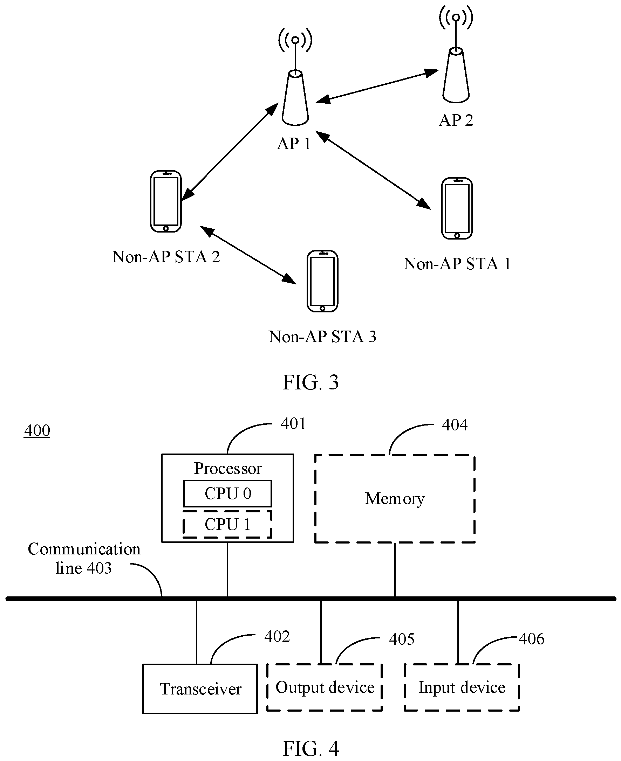

In an example, FIG. 3 is a diagram of an architecture of a WLAN communication system according to this application. In FIG. 3, an example in which the WLAN communication system includes an AP 1, an AP 2, a non-AP STA 1, a non-AP STA 2, and a non-AP STA 3 is used. It should be understood that a quantity of APs and a quantity of non-AP STAs in FIG. 3 are merely examples, and there may be more or fewer APs and non-AP STAs.

For example, in the communication system shown in FIG. 3, the AP 1 may be a first device, and the non-AP STA 1 may be a second device. Alternatively, the AP 1 may be a first device, and the AP 2 may be a second device. Alternatively, one of the non-AP STA 2 and the non-AP STA 3 is a first device, and the other is a second device. It should be understood that the APs and the non-AP STAs in FIG. 3 may also have other combinations as the first device and the second device. This is not limited.

The non-AP STAin embodiments of this application may be a wireless communication chip, a wireless sensor, or a wireless communication terminal. For example, the non-AP STA may be a user terminal, a user apparatus, an access apparatus, a subscriber station, a subscriber unit, a mobile station, a user agent, or user equipment that supports a wireless fidelity (wireless fidelity, Wi-Fi) communication function. The user terminal may include various handheld devices, vehicle-mounted devices, wearable devices, internet of things (internet of things, IoT) devices, computing devices, or other processing devices connected to wireless modems that have a wireless communication function, and include various forms of user equipment (user equipment, UE), mobile non-AP stations (mobile non-AP station, MS), terminals (terminal), terminal devices (terminal equipment), portable communication devices, handheld devices, portable computing devices, entertainment devices, game devices or systems, global positioning system devices, or any other suitable devices configured to perform network communication via a wireless medium. In addition, the non-AP STA may support the 802.11bf standard. The non-AP STA may also support a plurality of WLAN standards such as the 802.11be standard or a next generation standard of 802.11be, 802.11ax, 802.11ac, 802.11n, 802.11g, 802.11b, and 802.11a.

The AP in embodiments of this application may be an apparatus that is deployed in a wireless communication network and that provides a wireless communication function for a non-AP STA associated with the AP. The AP is mainly deployed in a home, a building, and a campus. A typical coverage radius of the AP is tens of meters to hundreds of meters. Certainly, the AP may alternatively be deployed outdoors. The AP is equivalent to a bridge connecting a wired network and a wireless network, and is mainly used to connect wireless network clients together, and then connect the wireless network to the Ethernet. Specifically, the AP may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP may support the 802.11bf standard. The AP may also support a plurality of WLAN standards such as the 802.1The standard or a next generation standard of 802.11be, 802.11ax, 802.11ac, 802.11n, 802.11g, 802.11b, and 802.11a.

In some embodiments, the AP and the non-AP STA in this application may be collectively referred to as WLAN devices. During specific implementation, the WLAN devices may use a composition structure shown in FIG. 4, or may include components shown in FIG. 4.

FIG. 4 is a schematic composition diagram of a WLAN device 400 according to an embodiment of this application. The WLAN device 400 may be a non-AP STA, or may be a chip or a chip system (or referred to as a system on chip) in a non-AP STA. Alternatively, the WLAN device 400 may be an AP, or may be a chip or a chip system (or referred to as a system on chip) in an AP. In this embodiment of this application, the chip system may include a chip, or may include a chip and another discrete component.

As shown in FIG. 4, the WLAN device 400 includes a processor 401 and a transceiver 402. Further, the WLAN device 400 may further include a memory 404. The processor 401, the memory 404, and the transceiver 402 may be connected through a communication line 403.

Optionally, the processor 401 may be a central processing unit (central processing unit, CPU), a general-purpose processor network processor (network processor, NP), a digital signal processing unit (digital signal processing, DSP), a microprocessor, a microcontroller, a programmable logic device (programmable logic device, PLD), or any combination thereof. The processor 401 may alternatively be another apparatus having a processing function, for example, a circuit, a component, or a software module. This is not limited.

In an example, the processor 401 may include one or more CPUs, for example, a CPU 0 and a CPU 1 in FIG. 4. The WLAN device 400 may include a plurality of processors. For example, in addition to the processor 401 in FIG. 4, the WLAN device 400 may further include another processor (not shown in FIG. 4).

The transceiver 402 is configured to communicate with another device or another communication network. The another communication network may be the Ethernet, a radio access network (radio access network, RAN), a WLAN, or the like. The transceiver 402 may be a module, a circuit, a transceiver, or any apparatus that can implement communication.

The communication line 403 is configured to transmit information between components included in the WLAN device 400.

The memory 404 is configured to store instructions. The instructions may be a computer program. The memory 404 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, and the like), a disk storage media or another magnetic storage device. This is not limited.

It should be noted that the memory 404 may be independent of the processor 401, or may be integrated into the processor 401. The memory 404 may be configured to store instructions, program code, some data, or the like. The memory 404 may be located inside the WLAN device 400, or may be located outside the WLAN device 400. This is not limited. The processor 401 may execute the instructions stored in the memory 404, to implement the method provided in the following embodiments of this application.

In an optional implementation, the WLAN device 400 further includes an output device 405 and an input device 406. For example, the input device 406 is a keyboard, a mouse, a microphone, a joystick, or another device, and the output device 405 is a display screen, a speaker (speaker), or another device.

It may be understood that the composition structure shown in FIG. 4 does not constitute a limitation on the WLAN device. In addition to the components shown in FIG. 4, the WLAN device may include more or fewer components than those shown in the figure, combine some components, or have different component arrangements.

The following describes in detail the method provided in embodiments of this application. It may be understood that in embodiments of this application, an execution body may perform some or all of the steps in embodiments of this application, and the steps or operations are merely examples. In embodiments of this application, other operations or variations of various operations may be further performed. In addition, the steps may be performed in a sequence different from a sequence presented in embodiments of this application, and not all the operations in embodiments of this application may be performed.

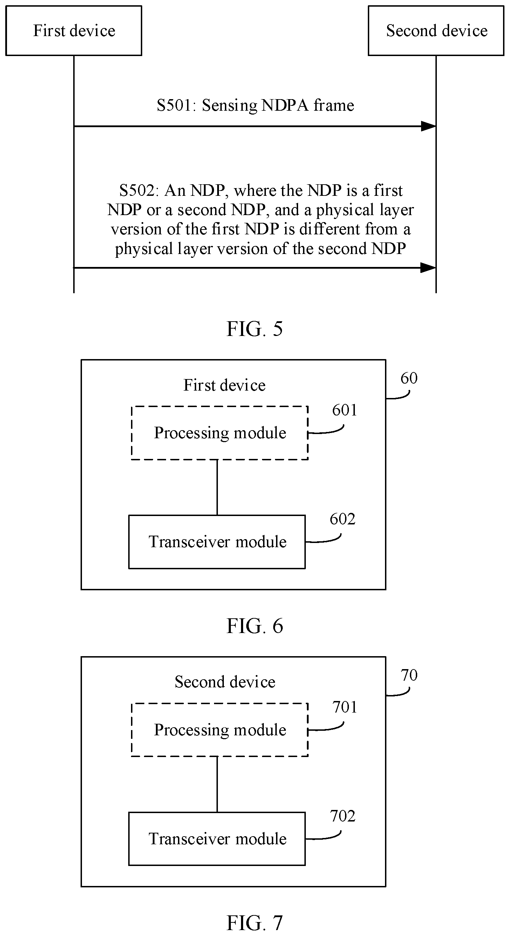

FIG. 5 is a schematic flowchart of an NDP transmitting and receiving method according to this application. The NDP transmitting and receiving method includes the following steps.

S501: A first device transmits a sensing NDPA (sensing NDPA) frame. Correspondingly, a second device receives the sensing NDPA frame from the first device. The sensing NDPA frame indicates that the first device is to transmit an NDP.

Optionally, the sensing NDPA frame may be understood as a new NDPA variant provided in this application. The new NDPA variant is distinguished from a VHT NDPA frame, a ranging NDPA frame, an HE NDPA frame, and an EHT NDPA frame.

It should be noted that the name "sensing NDPA frame" is merely used as an example to distinguish the new NDPA variant provided in this application from the four variants shown in Table 1. The name of the new NDPA variant is not specifically limited in this application. In actual application, the new NDPA variant may have another name, for example, a measuring (measuring) NDPA. In addition, the sensing NDPA frame provided in this application may be applicable to the IEEE 802.11bf standard. Certainly, the sensing NDPA frame may also be applicable to another 802.11 system standard, for example, the 802. 1The standard or a further next generation standard.

In some implementation scenarios, the sensing NDPA frame may reuse a ranging NDPA frame, or may reuse a VHT NDPA frame, an HE NDPA frame, or an EHT NDPA frame.

Optionally, when one of the foregoing four NDPA frames is reused, this application provides a new structure of the NDPA frame. The NDPA frame includes a sounding dialog token field, and a first subfield (B0 and B1) in the sounding dialog token field indicates a first NDPA frame. The first NDPA frame is one of a ranging NDPA frame, a VHT NDPA frame, an HE NDPA frame, or an EHT NDPA frame. For example, when the first NDPA frame is the ranging NDPA, in the first subfield, B0 may be set equal to 1, and B 1 may be set equal to 0. When the first NDPA frame is the VHT NDPA frame, in the first subfield, B0 may be set equal to 0, and B1 may be set equal to 0. When the first NDPA frame is the HE NDPA frame, in the first subfield, B0 may be set equal to 0, and B 1 may be set equal to 1. When the first NDPA frame is the EHT NDPA frame, in the first subfield, B0 may be set equal to 1, and B1 may be set equal to 1.

In a possible implementation, further, the NDPA frame further includes an additional field A that indicates whether the NDPA frame is the sensing NDPA frame or the first NDPA frame. For example, when a value of the field A is a first value, the NDPA frame is the sensing NDPA frame, or that the value of the field A is the first value indicates that the sensing NDPA frame reuses the first NDPA frame. When a value of the field A is a second value, the NDPA frame is a ranging NDPA frame.

For example, the field A may be located in a common part of the NDPA frame, and the common part includes a field other than the station information field. Alternatively, the field A may be located in each station information field, that is, each station information field includes the field A.

For example, a length of the field A may be 1 bit. The first value may be 1, and the second value may be 0. Alternatively, the first value may be 0, and the second value may be 1. Certainly, the length of the field A may have another implementation, for example, greater than 1 bit. This is not limited.

For example, the field A may be a reserved field in the common part or the station information field, or may be a newly added field in the common part or the station information field. This is not specifically limited in this application.

Optionally, after receiving the NDPA frame transmitted by the first device, the second device may parse the field A. If the field A indicates that the NDPA frame is the sensing NDPA frame, another field in the sensing NDPA frame may continue to be parsed based on a format of the sensing NDPA frame. If the field A indicates that the NDPA frame is the first NDPA frame, another field in the first NDPA frame may continue to be parsed based on a format of the first NDPA frame.

In embodiments of this application, the field A may also be referred to as a sixth field, and the field A and the sixth field may be mutually replaced. This is not specifically limited in this application.

In another possible implementation, further, when a special station information is present in the NDPA frame, it indicates that the NDPA frame is the sensing NDPA frame, or indicates that the sensing NDPA frame reuses the first NDPA frame. When the special station information field is not present in the NDPA frame, it indicates that the NDPA frame is the first NDPA frame. Alternatively, when the special station information is present in the NDPA frame, the NDPA frame is the first NDPA frame; or when the special station information field is not present in the NDPA frame, the NDPA frame is the sensing NDPA frame. A value of an association identifier field included in the special station information field may be a preset specific value. The specific value is not an AID corresponding to a station, and may be an AID value reserved in a conventional standard, for example, may be any value between 2008 to 2042.

Optionally, after receiving the NDPA frame transmitted by the first device, the second device may determine, based on whether the special station information is present in the NDPA frame, that the NDPA frame is the sensing NDAP or the first NDPA frame. If the special station information is present in the NDPA frame, another field in the sensing NDPA frame may continue to be parsed based on a format of the sensing NDPA frame. If the special station information field is not present in the NDPA frame, another field in the first NDPA frame may continue to be parsed based on a format of the first NDPA frame.

In addition, in the foregoing two possible implementations, the sensing NDPA frame may further include one or more of a frame control field, a duration field, an RA field, a TA field, a station information list field (or N station information fields), and a frame check sequence field.

In still another possible implementation, before transmitting the sensing NDPA frame, the first device may transmit a radio frame. The radio frame indicates a type of the NDPA frame to be transmitted by the first device, or indicates a type of an NDPA variant. If the radio frame indicates that the type of the NDPA frame to be transmitted by the first device is a sensing NDPA frame, the second device parses, based on a format of the sensing NDPA frame, the NDPA frame received in the step S501. If the radio frame indicates that the type of the NDPA frame to be transmitted by the first device is the first NDPA frame, the second device parses, based on a format of the first NDPA frame, the NDPA frame received in the step S501.

It may be understood that, in a scenario in which the first device transmits the sensing NDPA frame in the step S501, the radio frame may also be considered as indicating a type of the sensing NDPA frame.

In other implementation scenarios, the sensing NDPA frame may include a frame control field. The frame control field may include a control frame extension (control frame extension) field. The control frame extension field may indicate a type of the sensing NDPA frame. In other words, an NDPA frame carrying the control frame extension field is a sensing NDPA frame, or the control frame extension field indicates that the sensing NDPA frame is a newly defined NDPA frame. That is, the control frame extension field may be used to distinguish between a sensing NDPA frame and a ranging NDPA frame, a VHT NDPA frame, an HE NDPA frame, or an EHT NDPA frame.

Optionally, after receiving the NDPA frame transmitted by the first device, the second device may parse the control frame extension field, determine, based on a control frame, that the NDPA frame is a sensing NDPA frame, and then, continue to parse another field in the sensing NDPA frame based on a format of the sensing NDPA frame.

In addition, in this implementation scenario, the sensing NDPA frame may further include one or more of a duration field, an RA field, a TA field, a station information list field (or N station information fields), and a frame check sequence field.

S502: The first device transmits the NDP. Correspondingly, the second device receives the NDP from the first device.

The NDP is a first NDP or a second NDP. A type of the first NDP is different from a type of the second NDP.

Optionally, in this application, that NDPs have different types may include at least one of the following: The NDPs have different physical layer (physical layer, PHY) versions (PHY version), support different functions, or have different formats. For example, a physical layer version may include but is not limited to EHT, HE, VHT, and the like.

For example, when two NDPs have a same physical layer version but support different functions, the two NDPs may also be understood as NDPs of different types. For example, an HE ranging NDP and an HE sounding NDP have a same physical layer version but support different functions. Therefore, the HE ranging NDP and the HE sounding NDP may be considered as NDPs of different types.

For example, when different types of NDPs mean that physical layer versions of the NDPs are different, a physical layer version of the first NDP is different from a physical layer version of the second NDP.

Optionally, the first NDP or the second NDP may be understood as an NDP brought from the sensing NDPA frame, or an NDP corresponding to the sensing NDPA frame.

Optionally, the first NDP meets at least one of the following: A bandwidth supported by the first NDP is greater than a first threshold, or the first NDP supports puncturing (puncture). For example, the first NDP may be an EHT NDP. The first threshold may be a bandwidth that is of a PPDU including a sensing NDPA and that is claimed in the HE standard or a maximum bandwidth of an NDP, for example, 160 megahertz (MHz).

Optionally, the second NDP meets at least one of the following: The second NDP supports a secure long training field (long training field, LTF), or the second NDP supports a repeated LTF. For example, the second NDP may be an HE ranging NDP, and a corresponding LTF is an HE-LTF, that is, the second NDP supports a secure HE-LTF or a repeated HE-LTF. The repeated LTF may mean that an LTF is repeated for a plurality of times, or the second NDP may include a plurality of same LTFs.

According to this solution, the first device transmits the sensing NDPA frame, and the first NDP or the second NDP is brought from the sensing NDPA frame. This avoids that only one fixed NDP is brought from the sensing NDPA frame, or avoids that the sensing NDPA frame corresponds to only one fixed NDP, and flexibly and fully utilizes advantages of the first NDP and the second NDP, thereby improving sensing performance.

Further, when the bandwidth supported by the first NDP is greater than the first threshold, because a larger bandwidth greatly helps improve sensing accuracy, sensing accuracy may be improved by transmitting the first NDP. When the first NDP supports puncturing, bandwidth resources may be more effectively utilized and resource utilization may be improved by transmitting the first NDP. When the second NDP supports the secure LTF, security performance may be improved by transmitting the second NDP. When the second NDP supports the repeated LTF, a signal-to-noise ratio of a receiving end may be improved.

The foregoing describes an overall procedure of the NDP transmitting and receiving method provided in this application. The following describes a rule for selecting the first NDP or the second NDP in the step S502.

Optionally, when a first condition is met, the NDP in the step S502 is the first NDP; or when the first condition is not met, the NDP in the step S502 is the second NDP. That is, when the first condition is met, the first device transmits the first NDP in the step S502, and when the first condition is not met, the first device transmits the second NDP in the step S502.

Correspondingly, when the first condition is met, the second device parses the received NDP based on a format of the first NDP. When the first condition is not met, the second device parses the received NDP based on a format of the second NDP.

Optionally, the first condition includes at least one of the following:
(1) A bandwidth of a first PPDU is greater than the first threshold.

Optionally, when the bandwidth of the first PPDU is greater than the first threshold, the first device may transmit the first NDP, and the second device parses the received NDP based on the format of the first NDP. When the bandwidth of the first PPDU is not greater than the first threshold, the first device may transmit the second NDP, and the second device parses the received NDP based on the format of the second NDP.

In a possible implementation, the first PPDU includes the sensing NDPA frame in the step S501. In other words, the first PPDU is a PPDU that includes the sensing NDPA frame.

In another possible implementation, the first PPDU is the NDP in the step S502. When the first condition is met, the NDP in the step S502 is the first NDP. Therefore, the first PPDU may also be considered as the first NDP.

Optionally, the bandwidth of the first PPDU may be a bandwidth claimed by the first device for transmitting the first PPDU, for example, may be a bandwidth claimed by the first device in a beacon (beacon) frame (the beacon frame is transmitted before the step S501), or may be a bandwidth indicated by a preamble part of the first PPDU. Alternatively, the bandwidth of the first PPDU may be a bandwidth actually occupied by the first PPDU.

For example, it is assumed that the bandwidth claimed by the first device for transmitting the first PPDU is 320 MHz, but a bandwidth of 80 MHz is unavailable in the 320 MHz bandwidth, and the bandwidth actually occupied by the first PPDU is 240 MHz. In this case, the bandwidth of the first PPDU may be understood as 320 MHz, or may be understood as 240 MHz.

Optionally, when the bandwidth of the first PPDU is greater than the first threshold, the first PPDU may be an EHT PPDU, or a non-high throughput (high throughput, HT) duplicate PPDU, that is, a non-HT duplicate PPDU. Certainly, the first PPDU may alternatively be a PPDU in another form or type. This is not specifically limited in this application.

In a possible implementation, when the first PPDU includes the sensing NDPA frame, the second device may determine, based on a bandwidth claimed in the beacon frame, a bandwidth indicated in the first PPDU, or a detected bandwidth occupied by the first PPDU, whether the bandwidth of the first PPDU is greater than the first threshold. If the bandwidth of the first PPDU is greater than the first threshold, the NDP received in the step S502 is determined to be the first NDP, and the NDP is parsed based on the format of the first NDP. If the first PPDU is not greater than the first threshold, the NDP received in the step S502 is determined to be the second NDP, and the NDP is parsed based on the format of the second NDP.

In another possible implementation, when the first PPDU is the NDP in the step S502, the second device may determine, based on a bandwidth indicated in the first PPDU, whether the bandwidth of the first PPDU is greater than the first threshold, and perform corresponding processing based on a determining result. Alternatively, if the first threshold is 160 MHz, and a bandwidth claimed in the beacon frame is 320 MHz, the second device may determine that the bandwidth of the first PPDU is greater than the first threshold, and perform corresponding processing. For corresponding processing performed based on the determining result, refer to related descriptions of a case in which the first PPDU includes the sensing NDPA frame. Details are not described herein again.

In still another possible implementation, the sensing NDPA frame may include a first field, and the first field indicates whether the bandwidth of the first PPDU is greater than the first threshold. It may be understood that, when the bandwidth of the first PPDU is greater than the first threshold, the first field indicates that the bandwidth of the first PPDU is greater than the first threshold; or when the bandwidth of the first PPDU is not greater than the first threshold, the first field indicates that the bandwidth of the first PPDU is not greater than the first threshold.

For example, when the first threshold is 160 MHz, a usually used bandwidth that is greater than 160 MHz is 320 MHz. In this case, it may also be considered that the first field indicates whether the bandwidth of the first PPDU is 320 MHz.

Optionally, in this possible implementation, when the first field indicates that the bandwidth of the first PPDU is greater than the first threshold, the second device parses the received NDP based on the format of the first NDP. When the first field indicates that the bandwidth of the second PPDU is not greater than the first threshold, the second device parses the received NDP based on the format of the second NDP.

Optionally, the foregoing condition (1) may alternatively include: The bandwidth of the first PPDU is greater than or equal to the first threshold, that is, when the bandwidth of the first PPDU is equal to the first threshold, the first device may also transmit the first NDP, and correspondingly, the second device parses the received NDP based on the format of the first NDP.

(2) An unavailable subchannel is present on a first channel.

The first channel is used to transmit the first PPDU. The first PPDU may be a PPDU that includes a sensing NDPA frame, or may be the NDP in the step 502. For details, refer to related descriptions in the foregoing condition (1). Details are not described herein again.

Optionally, when the unavailable subchannel is present on the first channel, the first device may transmit the first NDP, and the second device parses the received NDP based on the format of the first NDP. When the unavailable subchannel is not present on the first channel, the first device may transmit the second NDP, and the second device parses the received NDP based on the format of the second NDP. For example, a bandwidth of one subchannel may be 20 MHz.

Optionally, the first device may notify, in the following two manners, the second device that the unavailable subchannel is present on the first channel.

Manner 1: The sensing NDPA frame may include a first station information field. The first station information field includes an association identifier field, and a value of the association identifier field is a first specific value. The first specific value indicates that the unavailable subchannel is present on the first channel.

It should be noted that the "unavailable subchannel" in this application may also be referred to as a "disallowed subchannel", and the "unavailable subchannel" and the "disallowed subchannel" may be mutually replaced. This is not specifically limited in this application.

For example, the first specific value is not an AID corresponding to a station, and may be a value related to the unavailable subchannel, for example, 2047. Alternatively, the first specific value may be an AID value reserved in a conventional standard, for example, may be a value between 2008 and 2042. Alternatively, the first specific value may be 2046.

Optionally, after receiving the sensing NDPA frame, the second device parses the sensing NDPA frame, and when the value of the association identifier field of the first station information field is the first specific value, the second device parses the NDP received in the step S502 based on the format of the first NDP. When the NDPA frame does not include the first station information field, or the value of the association identifier field of the first station information field is not the first specific value, the second device may parse the NDP received in the step 502 based on the format of the second NDP.

Optionally, the first station information field may be a station information field that appears for the first time in the sensing NDPA frame. In other words, in all station information fields included in the sensing NDPA frame, the first station information field is located at a first location. Certainly, the first station information field may alternatively appear at another location in the sensing NDPA frame. This is not specifically limited in this application.

Further, the first station information field may further include a second field. The second field indicates the unavailable subchannel on the first channel. When the first PPDU is an NDP, the first channel is used to transmit the NDP, and the second field indicates that an unavailable subchannel is present on a channel for NDP transmission.

In an example, the second field may be a disallowed subchannel bitmap (disallowed subchannel bitmap) subfield. For example, when a total quantity of subchannels included in the first channel is M, the disallowed subchannel bitmap subfield may include M bits. The M bits may one-to-one correspond to the M subchannels included in the first channel. When a value of a bit is 1 (or 0), it may indicate that a subchannel corresponding to the bit is an unavailable subchannel. Alternatively, when a total quantity of subchannels included in the first channel is M, the disallowed subchannel bitmap subfield may include M/X bits. In this case, one bit corresponds to X subchannels of the first channel, and when a value of a bit is 1 (or 0), it may indicate that all the X subchannels corresponding to the bit are unavailable subchannels.

In another example, when the first PPDU is an NDP, the second field may be another field that indicates an unavailable subchannel in a channel for NDP transmission and that is different from the disallowed subchannel bitmap.

Optionally, in this scenario, when the value of the association identifier field of the first station information field is the first specific value, and the second field in the first station information field indicates the unavailable subchannel, the second device parses the NDP received in the step S502 based on the format of the first NDP.

Manner 2: The first device may transmit a beacon frame. The beacon frame includes first indication information, and the first indication information indicates that the unavailable subchannel is present on the first channel.

Correspondingly, the second device may receive the beacon frame from the first device. When the first indication information in the beacon frame indicates that the unavailable subchannel is present on the first channel, the second device parses the NDP based on the format of the first NDP.

Optionally, when the beacon frame does not include the first indication information, or the first indication information indicates that the unavailable subchannel is not present on the first channel, the second device parses the received NDP based on the format of the second NDP.

Further, in the foregoing two manners, when the unavailable subchannel on the first channel overlaps a subchannel range corresponding to a transmission bandwidth of the NDP, the first device transmits the first NDP. When the unavailable subchannel is present on the first channel, but the unavailable subchannel does not overlap a subchannel range corresponding to a transmission bandwidth of the NDP, the first device may transmit the first NDP, or may transmit the second NDP.

For example, it is assumed that a bandwidth of the first channel is 320 MHz, the first channel is divided into four 80 MHz areas, the fourth 80 MHz areas are unavailable, and a bandwidth actually occupied by a PPDU that includes a sensing NDPA frame is 160 MHz. In this scenario:

Regardless of whether the unavailable subchannel overlaps the subchannel range corresponding to the transmission bandwidth of the NDP, the first device may transmit the first NDP, because the first NDP supports puncturing, even if the unavailable subchannel overlaps the subchannel range corresponding to the transmission bandwidth of the NDP, the first device may transmit the first NDP in which puncturing occurs.

If the unavailable subchannel does not overlap the subchannel range corresponding to the transmission bandwidth of the NDP, for example, the subchannel range corresponding to the transmission bandwidth of the NDP includes a first 80 MHz area and a second 80 MHz area, the NDP transmitted by the first device may be an NDP specified in a standard or a default NDP. For example, if the standard specifies that the first NDP is transmitted in this scenario, the first device transmits the first NDP, or if the standard specifies that the second NDP is transmitted in this scenario, the first device transmits the second NDP.

If the unavailable subchannel overlaps the subchannel range corresponding to the transmission bandwidth of the NDP, for example, the subchannel range corresponding to the transmission bandwidth of the NDP includes a third 80 MHz area and a fourth 80 MHz area, because a subchannel range corresponding to the fourth 80 MHz area is unavailable, the first device may transmit the first NDP instead of transmitting the second NDP.

The subchannel range corresponding to the transmission bandwidth of the NDP may be the same as a subchannel range corresponding to a transmission bandwidth of a PPDU that includes a sensing NDPA frame. For example, based on the foregoing example, when the subchannel range corresponding to the transmission bandwidth of the PPDU that includes the sensing NDPA frame includes a first 80 MHz area and a second 80 MHz area, the subchannel range corresponding to the transmission bandwidth of the NDP also includes a first 80 MHz area and a second 80 MHz area.

(3) Puncturing occurs in the first PPDU. The first PPDU may be a PPDU that includes a sensing NDPA frame, or may be the NDP in the step 502. For details, refer to related descriptions in the foregoing condition (1). Details are not described herein again.

Optionally, when puncturing occurs in the first PPDU, the first device may transmit the first NDP, and the second device parses the received NDP based on the format of the first NDP. When puncturing is not present in the first PPDU, the first device may transmit the second NDP, and the second device parses the received NDP based on the format of the second NDP.

Optionally, when the first PPDU includes the sensing NDPA frame, a preamble part of the first PPDU may include a third field, and the third field may indicate that puncturing occurs in the first PPDU.

Correspondingly, after the second device receives the first PPDU, and when the third field indicates that puncturing occurs in the first PPDU, the second device parses the NDP received in the step S502 based on the format of the first NDP. When the preamble part of the first PPDU does not include the third field, or the third field indicates that puncturing is not present in the first PPDU, the second device parses the NDP received in the step S502 based on the format of the second NDP.

Optionally, when the first PPDU is the NDP, because a transmission location of the PPDU that includes the sensing NDPA frame is usually the same as a transmission location of the NDP brought from the sensing NDPA frame, when the second device learns that puncturing occurs in the PPDU that includes the sensing NDPA frame, the second device may also be learned that puncturing occurs in the NDP brought from the sensing NDPA frame.

(4) A quantity of data streams supported by the NDP is greater than or equal to a second threshold.

Optionally, when the quantity of data streams supported by the NDP is greater than or equal to the second threshold, the first device may transmit the first NDP, and the second device parses the received NDP based on the format of the first NDP. When the quantity of data streams supported by the NDP is smaller than the second threshold, the first device may transmit the second NDP, and the second device parses the received NDP based on the format of the second NDP.

Optionally, the second threshold may be a quantity of data streams not supported by the second NDP. For example, the second threshold may be equal to 8.

Optionally, the first device may add a field B to the sensing NDPA frame, and the field B indicates whether the quantity of data streams supported by the NDP brought from the sensing NDPA frame is greater than or equal to the second threshold. After the second device receives the sensing NDPA frame, if the field B indicates that the quantity of data streams supported by the NDP is greater than or equal to the second threshold, the second device parses the received NDP based on the format of the first NDP. If the field B indicates that the quantity of data streams supported by the NDP is smaller than the second threshold, the second device parses the received NDP based on the format of the second NDP. For example, the field B may be a number of space-time streams (number of space-time streams, NSTS) subfield, a number of spatial streams (number of spatial streams, NSS) subfield, a number of columns (number of columns, Nc) subfield, and the like.

In some implementation scenarios, the condition (4) may alternatively include: A total quantity of LTFs supported by the NDP is greater than or equal to a third threshold.

(5) A first resource is a resource unit that is not supported by the physical layer version of the second NDP.

The first resource is used to carry the sensing NDPA frame, or the first resource is a to-be-measured resource on the first channel.

Optionally, when the first resource is the resource unit that is not supported by the physical layer version of the second NDP, the first device may transmit the first NDP, and the second device parses the received NDP based on the format of the first NDP. When the first resource is not the resource unit that is not supported by the physical layer version of the second NDP, the first device may transmit the second NDP, and the second device parses the received NDP based on the format of the second NDP.

Optionally, a resource unit supported by the second NDP may be defined in a protocol. Therefore, the second device may learn of the resource unit supported by the second NDP.

When the first resource is used to carry the sensing NDPA frame, the second device may learn of the first resource by receiving the sensing NDPA frame, to determine whether the first resource is the resource unit that is not supported by the physical layer version of the second NDP.

When the first resource is the to-be-measured resource on the first channel, the sensing NDPA frame may include a station information field, and the station information field may include a fourth field that indicates the first resource. After receiving the sensing NDPA frame, the second device may learn of the first resource based on an indication of the fourth field, to determine whether the first resource is the resource unit that is not supported by the physical layer version of the second NDP.

For example, the fourth field may be a partial bandwidth information (partial BW info) subfield. BW refers to a bandwidth (bandwidth, BW). Certainly, the fourth field may alternatively be another subfield in the station information field. This is not specifically limited in this application.

Optionally, a resource unit in this application may include a resource unit (resource unit, RU) and/or a multi-resource unit (multi-RU, MRU).

The foregoing describes the rule for selecting the first NDP or the second NDP in the step S502. Designs of the sensing NDPA frame, the beacon frame, and the like may be understood as implicit indications of the first NDP and the second NDP. In addition, this application further provides the following several manners of explicitly or implicitly indicating the first NDP or the second NDP.

In a possible implementation, the sensing NDPA frame may include a fifth field, and the fifth field indicates whether the NDP in the step S502 is the first NDP or the second NDP. When a value of the fifth field is a third value, it indicates that the NDP is the first NDP; or when a value of the fifth field is a fourth value, it indicates that the NDP is the second NDP.

Optionally, a length of the fifth field may be 1 bit. The third value may be 1, and the fourth value may be 0. Alternatively, the third value may be 0, and the fourth value may be 1. Certainly, the length of the fifth field may have another implementation, for example, greater than 1 bit. This is not limited.

Optionally, the fifth field may be located in each station information field in the sensing NDPA frame, or the fifth field may be located in a field included in the sensing NDPA frame other than the station information field.

Optionally, after the second device receives the sensing NDPA frame, and if the fifth field indicates that the NDP is the first NDP, the second device parses the NDP based on the format of the first NDP. If the fifth field indicates that the NDP is the second NDP, the second device parses the NDP based on the format of the second NDP.

In another possible implementation, when a second station information is present in the sensing NDPA frame, the NDP is the first NDP. When the second station information field is not present in the sensing NDPA frame, the NDP is the second NDP. The second station information field includes an association identifier field, and a value of the association identifier field is a second specific value. For example, the second specific value may be one of 2046, 2047, or a value between 2008 and 2042. Optionally, the second specific value is different from the first specific value.

Optionally, after the second device receives the sensing NDPA frame, if the second station information is present in the sensing NDPA frame, the second device parses the NDP based on the format of the first NDP. If the second station information field is not present in the sensing NDPA frame, the second device parses the NDP based on the format of the second NDP.

In still another possible implementation, before transmitting the sensing NDPA frame, the first device may transmit a radio frame. The radio frame indicates whether the NDP is the first NDP or the second NDP. If the radio frame indicates that the NDP is the first NDP, the second device parses the NDP based on the format of the first NDP; or if the radio frame indicates that the NDP is the second NDP, the second device parses the NDP based on the format of the second NDP.

Optionally, the radio frame may be a beacon frame. Alternatively, the radio frame may be a radio frame in a sensing measurement setup phase, for example, a sensing measurement setup request frame or a sensing measurement setup response frame.

In still another possible implementation, in the step S502, the first device may transmit the NDP in a measurement instance. When trigger-based sounding (trigger-based sounding) and NDPA sounding occur in the measurement instance, the NDP may be the second NDP. In the trigger-based sounding, the first device may transmit a trigger frame to the second device, to trigger the second device to transmit the NDP.

In still another possible implementation, a format of the NDP brought from the sensing NDPA frame may be determined through a format of a PPDU that carries the sensing NDPA frame. For example, if the PPDU that carries the sensing NDPA frame is an EHT PPDU, the NDP brought from the sensing NDPA frame is the first NDP. If the PPDU that carries the sensing NDPA frame is not an EHT PPDU, the NDP brought from the sensing NDPA frame is the second NDP.

In still another possible implementation, a format of the NDP brought from the sensing NDPA frame may be determined by whether a medium access control (medium access control, MAC) frame carries a field corresponding to a standard of a specific generation. For example, when the standard is the EHT standard, if the MAC frame carries an EHT operation element (EHT operation element), the NDP brought from the sensing NDPA frame is the first NDP; or if the MAC frame does not carry the EHT operation element, the NDP brought from the sensing NDPA frame is the second NDP.

The foregoing embodiment uses an example in which the first NDP or the second NDP is brought from the sensing NDPA frame in one format for description. In some embodiments, the sensing NDPA frame in this application may have two formats, or there are two variants of the sensing NDPA frame. In the two formats, an NDP corresponding to a first format is the first NDP, and an NDP corresponding to a second format is the second NDP. In other words, an NDP corresponding to a first variant is the first NDP, and an NDP corresponding to a second variant is the second NDP.

Optionally, the foregoing sensing NDPA frames in two formats may be implemented by reusing a conventional NDPA frame, or may be implemented by defining a new NDPA frame. For example, one of the two implementations may be implemented by multiplexing the four NDPA frames shown in Table 1, and the other may be implemented by using a control frame extension field in a frame control field. Alternatively, the sensing NDPA frames in two formats may be implemented by multiplexing different NDPA frames in the four NDPA frames shown in Table 1. Alternatively, the sensing NDPA frames in two formats may be implemented by using two different values of the control frame extension field. Refer to the related description in the foregoing step S501, and details are not described herein again.

Optionally, frame structures of the sensing NDPA frames in the foregoing two formats may be different, or meanings of some fields may be different. This is not specifically limited in this application.

Optionally, whether a format of the sensing NDPA frame in the step S501 is specifically the first format or the second format may be determined with reference to the foregoing first condition. For example, when the first condition is met, the format of the sensing NDPA frame is the first format; or when the first condition is not met, a format of the sensing NDPA frame is the second format.

Optionally, when the sensing NDPA frames in two formats exist, the second device may determine, based on a format of the received sensing NDPA frame, a format of an NDP brought from the sensing NDPA frame, and parse the received NDP based on the format of the NDP.

It should be noted that the foregoing manner of implicitly indicating the first NDP or the second NDP and the foregoing manner of explicitly indicating the first NDP or the second NDP may be used separately, or may be used together. This is not specifically limited in this application.

It may be understood that, in the foregoing embodiments, the method and/or the steps implemented by the first device may also be implemented by a component (for example, a chip or a circuit) that can be used in the first device, and the method and/or the steps implemented by the second device may also be implemented by a component (for example, a chip or a circuit) that can be used in the second device.

The foregoing mainly describes the solutions provided in this application from a perspective of interaction between devices. Correspondingly, this application further provides a communication apparatus, and the communication apparatus is configured to implement the foregoing methods. The communication apparatus may be a first device in the foregoing method embodiments, an apparatus including the foregoing first device, or a component that can be used in the first device. Alternatively, the communication apparatus may be a second device in the foregoing method embodiments, an apparatus including the foregoing second device, or a component that can be used in the second device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

In an implementation scenario, for example, the communication apparatus is the first device in the foregoing method embodiments. FIG. 6 is a schematic of a structure of a first device 60. The first device 60 includes a transceiver module 602. Further, the first device 60 may further include a processing module 601.

In some embodiments, the first device 60 may further include a storage module (not shown in FIG. 6) that is configured to store program instructions and data.

In some embodiments, the transceiver module 602 may also be referred to as a transceiver unit, and is configured to implement a transmitting function and/or a receiving function. The transceiver module 602 may include a transceiver circuit, a transceiver device, a transceiver, or a communication interface.

In some embodiments, the transceiver module 602 may include a receiving module and a transmitting module. The receiving module and the transmitting module are respectively configured to perform receiving and transmitting steps performed by the first device in the foregoing method embodiments, and/or configured to support other processes of the technology described in this specification. The processing module 601 may be configured to perform processing-type steps (for example, generating) performed by the first device in the foregoing method embodiments, and/or configured to support other processes of the technology described in this specification.

The processing module 601 is configured to generate a sensing NDPA frame and an NDP. The transceiver module 1602 is configured to transmit the sensing NDPA frame, where the sensing NDPA frame indicates to transmit an NDP. The transceiver module 1602 is further configured to transmit the NDP, where the NDP is a first NDP or a second NDP, and a physical layer version of the first NDP is different from a physical layer version of the second NDP.

Optionally, the transceiver module 602 is further configured to transmit a beacon frame, where the beacon frame includes first indication information, and the first indication information indicates that the unavailable subchannel is present on a first channel.

Optionally, the transceiver module 602 is further configured to transmit a radio frame, where the radio frame indicates whether the NDP is the first NDP or the second NDP, and/or the radio frame indicates a type of the sensing NDPA frame.

Optionally, that the transceiver module 602 is configured to transmit the NDP includes: The transceiver module 602 is configured to transmit the NDP in a measurement instance. When trigger-based sounding and NDPA sounding occur in the measurement instance, the NDP is the second NDP.

All related content of the steps in the foregoing method embodiments may be cited in function descriptions of the corresponding functional modules. Details are not described herein again.

In this application, the first device 60 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in terms of hardware implementation, a person skilled in the art may figure out that the first device 60 may be in a form of the communication apparatus 400 shown in FIG. 4.

In an example, a function/implementation process of the processing module 601 in FIG. 6 may be implemented by the processor 401 in the communication apparatus 400 shown in FIG. 4 by invoking computer-executable instructions stored in the memory 404, and a function/implementation process of the transceiver module 602 in FIG. 6 may be implemented by using the transceiver 402 in the communication apparatus 400 shown in FIG. 4.

In some embodiments, when the first device 60 in FIG. 6 is a chip or a chip system, a function/implementation process of the transceiver module 602 may be implemented by using an input/output interface (or a communication interface) of the chip or the chip system, and a function/implementation process of the processing module 601 may be implemented by a processor (or a processing circuit) of the chip or the chip system.

Because the first device 60 provided in this embodiment can perform the foregoing methods, for technical effects that can be achieved by the first device 60, refer to the foregoing method embodiments. Details are not described herein again.

In an implementation scenario, for example, the communication apparatus is a second device in the foregoing method embodiments. FIG. 7 is a schematic of a structure of a second device 70. The second device 70 includes a transceiver module 702. Further, the second device 70 may further include a processing module 701.

In some embodiments, the second device 70 may further include a storage module (not shown in FIG. 7) that is configured to store program instructions and data.

In some embodiments, the transceiver module 702 may also be referred to as a transceiver unit, and is configured to implement a transmitting function and/or a receiving function. The transceiver module 702 may include a transceiver circuit, a transceiver device, a transceiver, or a communication interface.

In some embodiments, the transceiver module 702 may include a receiving module and a transmitting module. The receiving module and the transmitting module are respectively configured to perform receiving and transmitting steps performed by the second device in the foregoing method embodiments, and/or configured to support other processes of the technology described in this specification. The processing module 701 may be configured to perform processing-type steps (for example, parsing) performed by the second device in the foregoing method embodiments, and/or configured to support other processes of the technology described in this specification.

The transceiver module 702 is configured to receive a sensing null data physical layer protocol data unit announcement NDPA frame, where the sensing NDPA frame indicates to transmit a null data physical layer protocol data unit NDP. The transceiver module 702 is further configured to receive the NDP, where the NDP is a first NDP or a second NDP, and a physical layer version of the first NDP is different from a physical layer version of the second NDP.

Optionally, when the sensing NDPA frame includes a first field, the processing module 701 is configured to: when the first field indicates that a bandwidth of the first PPDU is greater than a first threshold, parse the NDP based on a format of the first NDP.

Optionally, when the sensing NDPA frame includes a first station information field, and the first station information field includes an association identifier field, the processing module 701 is further configured to: when a value of the association identifier field is a first specific value, parse the NDP based on the format of the first NDP, where the first specific value indicates that an unavailable subchannel is present on a first channel.

Optionally, the first station information field further includes a second field, and the processing module 701 is specifically configured to: when the value of the association identifier field is the first specific value, and the second field indicates the unavailable subchannel, parse the NDP based on the format of the first NDP.

Optionally, the transceiver module 702 is further configured to receive a beacon frame, where the beacon frame includes first indication information, and the processing module 701 is further configured to: when the first indication information indicates that the unavailable subchannel is present on the first channel, parse the NDP based on the format of the first NDP.

Optionally, when the first PPDU includes the sensing NDPA frame, and a preamble part of the first PPDU includes a third field, the processing module 701 is further configured to: when the third field indicates that puncturing occurs in a first PPDU, parse the NDP based on the format of the first NDP.

Optionally, when the first resource is a to-be-measured resource on the first channel, the sensing NDPA frame includes a station information field, and the station information field includes a fourth field; and the processing module 701 is further configured to: when the first resource indicated by the fourth field is a resource unit that is not supported by the physical layer version of the second NDP, parse the NDP based on the format of the first NDP.

Optionally, the sensing NDPA frame includes a fifth field, and the processing module 701 is configured to: when the fifth field indicates that the NDP is the first NDP, parse the NDP based on the format of the first NDP; or the processing module 701 is configured to: when the fifth field indicates that the NDP is the second NDP, parse the NDP based on the format of the first NDP.

Optionally, when a second station information is present in the sensing NDPA frame, the processing module 701 is further configured to parse the NDP based on the format of the first NDP; and when the second station information field is not present in the sensing NDPA frame, the processing module 701 is further configured to parse the NDP based on a format of the second NDP, where the second station information field includes an association identifier field, and a value of the association identifier field is a second specific value.

Optionally, the transceiver module 702 is further configured to receive a radio frame, where the radio frame indicates whether the NDP is the first NDP or the second NDP, and/or the radio frame indicates a type of the sensing NDPA frame.

Optionally, the transceiver module 702 is specifically configured to transmit the NDP in a measurement instance; and when trigger-based sounding and NDPA sounding occur in the measurement instance, the NDP is the second NDP.

All related content of the steps in the foregoing method embodiments may be cited in function descriptions of the corresponding functional modules. Details are not described herein again.

In this application, the second device 70 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in terms of hardware implementation, a person skilled in the art may figure out that the second device 70 may be in a form of the communication apparatus 400 shown in FIG. 4.

In an example, a function/implementation process of the processing module 701 in FIG. 7 may be implemented by the processor 401 in the communication apparatus 400 shown in FIG. 4 by invoking computer-executable instructions stored in the memory 404, and a function/implementation process of the transceiver module 702 in FIG. 7 may be implemented by using the transceiver 402 in the communication apparatus 400 shown in FIG. 4.

In some embodiments, when the second device 70 in FIG. 7 is a chip or a chip system, a function/implementation process of the transceiver module 702 may be implemented by using an input/output interface (or a communication interface) of the chip or the chip system, and a function/implementation process of the processing module 701 may be implemented by a processor (or a processing circuit) of the chip or the chip system.

Because the second device 70 provided in this embodiment can perform the foregoing methods, for technical effects that can be achieved by the second device 70, refer to the foregoing method embodiments. Details are not described herein again.

In a possible product form, the first device and the second device in embodiments of this application may be further implemented by using one or more field programmable gate arrays (field programmable gate array, FPGA), programmable logic devices (programmable logic device, PLD), controllers, state machines, gate logics, discrete hardware components, any other suitable circuits, or any combination of circuits that can perform various functions described in this application.

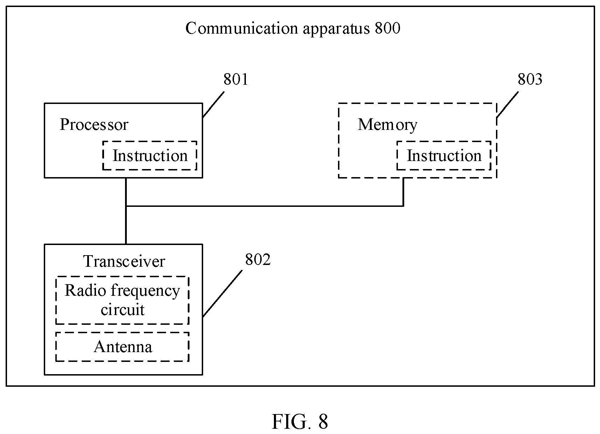

In another possible product form, the first device and the second device in embodiments of this application may be implemented by using a general bus architecture. For ease of description, FIG. 8 is a schematic of a structure of a communication apparatus 800 according to an embodiment of this application. The communication apparatus 800 includes a processor 801 and a transceiver 802. The communication apparatus 800 may be a first device, a second device, or a chip in the first device or the second device. FIG. 8 shows only main components of the communication apparatus 800. In addition to the processor 801 and the transceiver 802, the communication apparatus may further include a memory 803 and an input/output apparatus (not shown in the figure).

The processor 801 is mainly configured to: process a communication protocol and communication data, control the entire communication apparatus, execute a software program, and process data of the software program. The memory 803 is mainly configured to store the software program and the data. The transceiver 802 may include a radio frequency circuit and an antenna. The radio frequency circuit is mainly configured to convert a baseband signal and a radio frequency signal and process a radio frequency signal. The antenna is mainly configured to receive and transmit a radio frequency signal in a form of an electromagnetic wave. The input/output apparatus, such as a touchscreen, a display screen, or a keyboard, is mainly configured to: receive data input by a user and output data to the user.

The processor 801, the transceiver 802, and the memory 803 may be connected through a communication bus.

After the communication apparatus is powered on, the processor 801 may read the software program in the memory 803, interpret and execute instructions of the software program, and process the data of the software program. When data needs to be sent in a wireless manner, the processor 801 outputs a baseband signal to the radio frequency circuit after performing baseband processing on the to-be-sent data, and the radio frequency circuit performs radio frequency processing on the baseband signal, and then transmits the radio frequency signal outwards through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 801, and the processor 801 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, an embodiment of this application further provides a communication apparatus. The communication apparatus includes a processor that is configured to implement the method in any one of the foregoing method embodiments.

In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions is/are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located in a same place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A null data physical layer protocol data unit transmitting method, wherein the method comprises:
transmitting a sensing null data physical layer protocol data unit announcement NDPA frame, wherein the sensing NDPA frame indicates to transmit a null data physical layer protocol data unit NDP; and
transmitting the NDP, wherein the NDP is a first NDP or a second NDP, and a physical layer version of the first NDP is different from a physical layer version of the second NDP.

2. The method according to claim 1, wherein the first NDP meets at least one of the following: a bandwidth supported by the first NDP is greater than a first threshold, or the first NDP supports puncturing; and
the second NDP meets at least one of the following: the second NDP supports a secure long training field LTF, and the second NDP supports a repeated LTF.

3. The method according to claim 1 or 2, wherein the first NDP is an extremely high throughput EHT NDP, and the second NDP is a high efficient ranging HE ranging NDP.

4. The method according to claim 2 or 3, wherein when a first condition is met, the NDP is the first NDP; or when the first condition is not met, the NDP is the second NDP; and
the first condition comprises at least one of the following:
a bandwidth of a first physical layer protocol data unit PPDU is greater than the first threshold, wherein the first PPDU comprises the sensing NDPA frame, or the first PPDU is the NDP;
puncturing occurs in the first PPDU;
an unavailable subchannel is present on a first channel, wherein the first channel is used to transmit the first PPDU;
a quantity of data streams supported by the NDP is greater than or equal to a second threshold; and
a first resource is a resource unit that is not supported by the physical layer version of the second NDP, wherein the first resource is used to carry the sensing NDPA frame, or the first resource is a to-be-measured resource on the first channel.

5. The method according to claim 4, wherein the sensing NDPA frame comprises a first field, and the first field indicates that the bandwidth of the first PPDU is greater than the first threshold.

6. The method according to claim 4 or 5, wherein the first PPDU comprises indication information, and the indication information indicates the bandwidth of the first PPDU.

7. The method according to any one of claims 4 to 6, wherein the first threshold is 160 megahertz MHz.

8. The method according to any one of claims 4 to 7, wherein the sensing NDPA frame comprises a first station information field, the first station information field comprises an association identifier field, a value of the association identifier field is a first specific value, and the first specific value indicates that the unavailable subchannel is present on the first channel.

9. The method according to claim 8, wherein the first station information field further comprises a second field, and the second field indicates the unavailable subchannel.

10. The method according to any one of claims 4 to 7, wherein the method further comprises:
transmitting a beacon frame, wherein the beacon frame comprises first indication information, and the first indication information indicates that the unavailable subchannel is present on the first channel.

11. The method according to any one of claims 8 to 10, wherein the unavailable subchannel overlaps a subchannel range corresponding to a transmission bandwidth of the NDP.

12. The method according to any one of claims 4 to 7, wherein when the first PPDU comprises the sensing NDPA frame, a preamble part of the first PPDU comprises a third field, and the third field indicates that puncturing occurs in the first PPDU.

13. The method according to any one of claims 4 to 12, wherein when the first resource is the to-be-measured resource on the first channel, the sensing NDPA frame comprises a station information field, the station information field comprises a fourth field, and the fourth field indicates the first resource.

14. The method according to claim 1, wherein if a bandwidth of a first PPDU is equal to 320 MHz, the NDP is the first NDP, and the first NDP is an EHT NDP; or
if a bandwidth of a first PPDU is less than or equal to 160 MHz, the NDP is the second NDP, and the second NDP is an HE ranging NDP.

15. The method according to any one of claims 1 to 14, wherein the sensing NDPA frame comprises a fifth field, and the fifth field indicates whether the NDP is the first NDP or the second NDP.

16. The method according to claim 15, wherein the fifth field is located in each station information field in the sensing NDPA frame, or the fifth field is located in a field comprised in the sensing NDPA frame other than the station information field.

17. The method according to any one of claims 1 to 14, wherein when a second station information is present in the sensing NDPA frame, the NDP is the first NDP; or when the second station information field is not present in the sensing NDPA frame, the NDP is the second NDP; and
the second station information field comprises an association identifier field, and a value of the association identifier field is a second specific value.

18. The method according to any one of claims 1 to 14, wherein before the transmitting a sensing NDPA frame, the method further comprises:
transmitting a radio frame, wherein the radio frame indicates whether the NDP is the first NDP or the second NDP, and/or the radio frame indicates a type of the sensing NDPA frame.

19. The method according to any one of claims 1 to 3, wherein the transmitting the NDP comprises: transmitting the NDP in a measurement instance, wherein when trigger-based sounding and NDPA sounding occur in the measurement instance, the NDP is the second NDP.

20. The method according to any one of claims 1 to 19, wherein
the sensing NDPA frame comprises a sounding dialog token field and a sixth field, the sounding dialog token field comprises a first subfield, the first subfield indicates a first NDPA frame, and the sixth field indicates that the sensing NDPA frame reuses the first NDPA frame; and the first NDPA frame is one of a ranging NDPA frame, a very high throughput VHT NDPA frame, a high efficient HE NDPA frame, or an extremely high throughput EHT NDPA frame; or
the sensing NDPA frame comprises a frame control field, the frame control field comprises a control frame extension field, and the control frame extension field indicates the type of the sensing NDPA frame.

21. The method according to any one of claims 1 to 19, wherein the sensing NDPA frame comprises a field A, and the field A indicates that the NDPA frame is a sensing NDPA frame or a ranging NDPA frame.

22. The method according to claim 21, wherein the sensing NDPA frame further comprises the station information field, and the station information field comprises the field A.

23. A null data physical layer protocol data unit receiving method, wherein the method comprises:
receiving a sensing null data physical layer protocol data unit announcement NDPA frame, wherein the sensing NDPA frame indicates to transmit a null data physical layer protocol data unit NDP; and
receiving the NDP, wherein the NDP is a first NDP or a second NDP, and a physical layer version of the first NDP is different from a physical layer version of the second NDP.

24. The method according to claim 23, wherein the first NDP meets at least one of the following: a bandwidth supported by the first NDP is greater than a first threshold, or the first NDP supports puncturing; and
the second NDP meets at least one of the following: the second NDP supports a secure long training field LTF, and the second NDP supports a repeated LTF.

25. The method according to claim 23 or 24, wherein the first NDP is an extremely high throughput EHT NDP, and the second NDP is a high efficient ranging HE ranging NDP.

26. The method according to claim 24 or 25, wherein when a first condition is met, the NDP is the first NDP; or when the first condition is not met, the NDP is the second NDP; and
the first condition comprises at least one of the following:
a bandwidth of a first physical layer protocol data unit PPDU is greater than the first threshold, wherein the first PPDU comprises the sensing NDPA frame, or the first PPDU is the NDP;
puncturing occurs in the first PPDU;
an unavailable subchannel is present on a first channel, wherein the first channel is used to transmit the first PPDU;
a quantity of data streams supported by the NDP is greater than or equal to a second threshold; and
a first resource is a resource unit that is not supported by the physical layer version of the second NDP, wherein the first resource is used to carry the sensing NDPA frame, or the first resource is a to-be-measured resource on the first channel.

27. The method according to claim 26, wherein the sensing NDPA frame comprises a first field, and the method further comprises:
when the first field indicates that the bandwidth of the first PPDU is greater than the first threshold, parsing the NDP based on a format of the first NDP.

28. The method according to claim 26 or 27, wherein the first PPDU comprises indication information, and the indication information indicates the bandwidth of the first PPDU.

29. The method according to any one of claims 26 to 28, wherein the first threshold is 160 megahertz MHz.

30. The method according to any one of claims 26 to 29, wherein the sensing NDPA frame comprises a first station information field, and the first station information field comprises an association identifier field; and the method further comprises:
when a value of the association identifier field is a first specific value, parsing the NDP based on the format of the first NDP, wherein the first specific value indicates that the unavailable subchannel is present on the first channel.

31. The method according to claim 30, wherein the first station information field further comprises a second field, and when the value of the association identifier field is the first specific value, the parsing the NDP based on the format of the first NDP comprises:
when the value of the association identifier field is the first specific value, and the second field indicates the unavailable subchannel, parsing the NDP based on the format of the first NDP.

32. The method according to any one of claims 26 to 29, wherein the method further comprises:
receiving a beacon frame, wherein the beacon frame comprises first indication information; and
when the first indication information indicates that the unavailable subchannel is present on the first channel, parsing the NDP based on the format of the first NDP.

33. The method according to any one of claims 30 to 32, wherein the unavailable subchannel overlaps a subchannel range corresponding to a transmission bandwidth of the NDP.

34. The method according to any one of claims 26 to 29, wherein when the first PPDU comprises the sensing NDPA frame, a preamble part of the first PPDU comprises a third field, and the method further comprises:
when the third field indicates that puncturing occurs in the first PPDU, parsing the NDP based on the format of the first NDP.

35. The method according to any one of claims 26 to 34, wherein when the first resource is the to-be-measured resource on the first channel, the sensing NDPA frame comprises a station information field, and the station information field comprises a fourth field; and the method further comprises:
when the first resource indicated by the fourth field is a resource unit that is not supported by the physical layer version of the second NDP, parsing the NDP based on the format of the first NDP.

36. The method according to claim 23, wherein if a bandwidth of a first PPDU is equal to 320 MHz, the NDP is the first NDP, and the first NDP is an EHT NDP; or
if a bandwidth of a first PPDU is less than or equal to 160 MHz, the NDP is the second NDP, and the second NDP is an HE ranging NDP.

37. The method according to any one of claims 23 to 36, wherein the sensing NDPA frame comprises a field A, and the field A indicates that the NDPA frame is a sensing NDPA frame or a ranging NDPA frame.

38. The method according to claim 37, wherein the sensing NDPA frame further comprises the station information field, and the station information field comprises the field A.

39. A communication apparatus, wherein the communication apparatus comprises a processor; and
the processor is configured to execute computer-executable instructions, to implement the method according to any one of claims 1 to 22, or implement the method according to any one of claims 23 to 38.

40. A computer-readable storage medium, comprising instructions, wherein when the instructions are run on a communication apparatus, the method according to any one of claims 1 to 22 is implemented, or the method according to any one of claims 23 to 38 is implemented.

41. A computer program product, wherein when the computer program product runs on a communication apparatus, the method according to any one of claims 1 to 22 is implemented, or the method according to any one of claims 23 to 38 is implemented.

42. A communication system, wherein the communication system comprises a first device and a second device, the first device is configured to perform the method according to any one of claims 1 to 22, and the second device is configured to perform the method according to any one of claims 23 to 38.

43. A chip, comprising:
a memory, configured to store computer program instructions; and
a processor, configured to execute the computer program instructions, to enable a communication apparatus that comprises the chip to perform the method according to any one of claims 1 to 38.
